# EUROPÄISCHE PATENTSCHRIFT

(11) **EP 1 095 837 B1**
(45) Veröffentlichungstag und Bekanntmachung des Hinweises auf die Patenterteilung: **06.07.2005**
(21) Anmeldenummer: 00122130.8
(22) Anmeldetag: 12.10.2000
(51) Int. Cl.: B61F 5/22, B60G 17/052, B61F 3/12

(54) **Niveauregelung für Sekundärfederung**
Level control for a secondary suspension
Commande de niveau pour une suspension secondaire

(30) Priorität: 25.10.1999 DE 19951230
(43) Veröffentlichungstag der Anmeldung: 02.05.2001
(73) Patentinhaber: ALSTOM LHB GmbH, 38239 Salzgitter (DE)
(72) Erfinder: Aherns, Ralf,Dr.-Ing., 38159 Vechelde (DE); Stradtmann, Hinnerk, Dipl.-Ing., 38106 Braunschweig (DE)

(56) Entgegenhaltungen:
- EP-A- 0 254 084
- DE-C- 4 424 566
- FR-A- 2 573 022
- US-A- 4 665 835
- US-A- 4 693 185

## Beschreibung

Die Erfindung betrifft einen Verband spurgeführter Fahrzeuge mit Niveauregelung für das Sekundärfedersytem, bestehend aus mindestens zwei durch Gelenk miteinander verbundene und sich an jedem Wagenübergang über zwei Sekundärfederpaare auf einem gemeinsamen Fahrwerk abstützende Wagenkästen.

Bisher sind aus der Praxis verschiedene Niveauregelungen für Sekundärfedersysteme bekannt. So wird für Einzelfahrzeuge bzw. Fahrzeugverbände, die durch Kupplungsstangen miteinander verbunden sind und deren Wagenkästen sich auf jeweils zwei eigenen Fahrwerken abstützen die Niveauregelung durch eine sogenannte "Dreipunktabstützung mit Längsausgleich" und belastungsabhängiger Niveauregelung gelöst. Hierbei sind auf einer Fahrzeugseite die beiden Sekundärfedern miteinander verbunden und werden durch ein gemeinsames Niveauregelventil eingestellt. In diese Verbindungsleitung kann ein Element zum Ausgleich unterschiedlicher Federlasten, z.B. ein Druckübersetzer eingebracht sein. Diese Lösung wird beispielsweise im VT 628/928 oder wie in der Zeitschrift "Nahverkehrs-Praxis", Heft 4/1996, Seite 5 beschrieben an den Radsätzen der BR 481 für die Berliner S-Bahn angewendet.

In der Zeitschrift "Der Nahverkehr", Heft 3/1988, Seite 38 ist eine Niveauregelung für die Sekundärfederung eines Laufdrehgestells beschrieben, bei der die beiden gegenüberliegenden Federn eines Drehgestells durch eine Verbindungsleitung miteinander verbunden sind, so daß dieses Federpaar keine Wankmomente aufnehmen kann. Hier muß zur Aufnahme des Wankmomentes für jeweils einen Wagen ein zusätzlicher Torsionsstab als Wankstütze angeordnet werden.

Bekannt von den elektrischen Triebzügen ET 420 oder den verbrennungskraftbetriebenen Triebzügen VT 624 sind statisch überbestimmte Regelungen bei der alle Sekundärfedern einzeln geregelt werden. Nachteil dieser Lösung ist, dass beim Befahren von Gleisverwindungen starke Verwindemomente auf den Wagenkasten aufgebracht werden, die hohe dynamische Radlastschwankungen hervorrufen, was zu Problemen beim Nachweis der Entgleisungssicherheit führen kann.

Für Einzelfahrzeuge, z.B. den ICE 2-Mittelwagen, oder für gelenkig verbundene Gliederzüge, wie z.B. den elektrischen Triebzug ET 423, ist eine statisch unbestimmte Regelung bekannt, bei der die gegenüberliegenden Federn jedes einzelnen Federpaares miteinander verbunden sind, so dass keines der Federpaare ein Wankmoment aufnehmen kann. Auch hierbei ist die Anordnung zusätzlicher Wankstützen zur Aufnahme des Wankmomentes erforderlich.

Aus der DE 44 24 566 C1 ist ein zweiteiliger, im Übergangbesreich gelenkig gekuppelter Fahrzeugverband mit einem zweirädrigen unter dem Übergangsbereich angeordneten Laufwerk bekannt, auf dessen Rahmen sich die beiden Wagenkästen über jeweils ein Sekundärfederpaar abstützen. Die Ausgestaltung des Abstützungskonzeptes der Wagenkästen bzw. die Ausbildung der Niveauregelung wird nicht näher beschrieben. Es wird lediglich darauf hingewiesen, dass das Gelenk für einen Ausgleich von unterschiedlichen Beladungen der beiden Fahrzeugteile (Wagenkästen) derart zu sorgen hat, dass die Sekundärfedern ausgeglichen belastet sind und dass es grundsätzlich möglich sein soll, die vier Luftfedern des gemeinsamen Fahrwerks miteinander fluidisch kommunizieren zu lassen.

Der Erfindung liegt die Aufgabe zugrunde, für einen Verband spurgeführter Fahrzeuge der eingangs erwähnten Art, eine Niveauregelung für das Sekundärfedersystem zu schaffen, die aus Gründen der Entgleisungssicherheit die dynamischen Radlastabweichungen beim Befahren von Gleisverwindungen minimiert und den Einsatz von zusätzlichen Bauteile zur Wankabstützung minimiert oder entbehrlich macht.

Erfindungsgemäß wird die Aufgabe durch die Merkmale des Anspruches 1 gelöst. Zweckmäßige Ausgestaltungen des Erfindungsgegenstandes sind in den Unteransprüchen angegeben.

Die erfindungsgemäße Lösung hat den Vorteil, dass beim Befahren von Gleisverwindungen kein Verwindemoment auf die Wagenkästen aufgebracht wird und damit keine dynamischen Radlastschwankungen infolge von Gleisverwindungen auftreten, was die Entgleisungssicherheit des Fahrzeugverbandes günstig beeinflu**ß**t. Da jedes Sekundärfederpaar zur Wankmomentenabstützung beiträgt, können zusätzliche Wankstützen im allgemeinen völlig eingespart werden. Durch diese Lösung wird die Kombination beider Vorteile vom Einzelfahrzeug auf Verbände von mehreren gelenkig miteinander verbundenen Fahrzeugen erweitert.

In den Zeichnungen sind verschiedene Ausführungsbeispiele der Erfindung schematisch dargestellt. Es zeigen:
- Fig. 1: einen zweiteiligen Fahrzeugverband ohne Wankkopplung der Wagenkästen,
- Fig. 2: eine Variante zu Fig. 1,
- Fig. 3: einen zweiteiligen Fahrzeugverband mit Wankkopplung der Wagenkästen,
- Fig. 4: einen dreiteiligen Fahrzeugverband ohne Wankkopplung der Wagenkästen,
- Fig. 5: einen dreiteiligen Fahrzeugverband mit Wankkopplung zweier Wagenkästen und Wank-Entkopplung des dritten Wagenkastens,
- Fig. 6: einen dreiteiligen Fahrzeugverband mit Wankkopplung aller Wagenkästen.

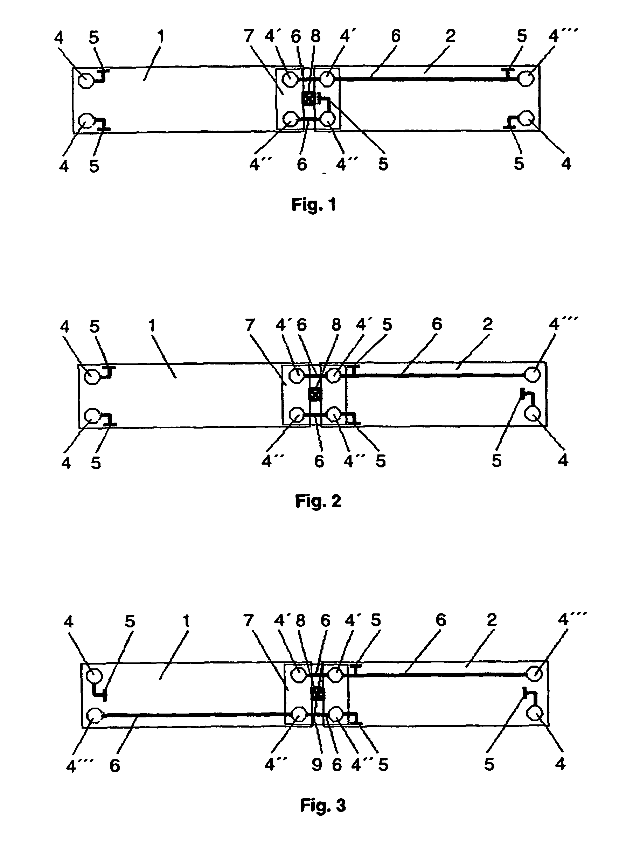

In den Figuren 1 bis 6 sind Beispiele für die erfindungsgemäße Anordnung von Luftfedern, Verbindungsleitungen 6 und Niveauregelventilen 5 für unterschiedliche Fahrzeugkonfigurationen dargestellt.

In der Fig. 1 ist ein zweiteiliger Fahrzeugverband, bestehend aus zwei Wagenkästen 1 und 2, die durch ein Gelenk 8 miteinander verbunden sind und sich am Übergang der Wagenkästen 1, 2 über zwei Paar Sekundärfedern 4', 4" auf einem gemeinsamen Fahrwerk 7 abstützen, dargestellt. Auf der einen Verbandseite werden am Fahrwerk 7 die hintereinanderliegenden Sekundärfedern 4' durch eine Verbindungsleitung 6 miteinander verbunden, die bis zur Sekundärfeder 4''' am hinteren Einzelfahrwerk des Wagenkastens 2 geführt ist. Dort ist ein Niveauregelventil 5 vorgesehen. Die auf der anderen Fahrzeugseite gegenüberliegenden Sekundärfedern 4'' am Fahrwerk 7 sind ebenfalls mit einer Verbindungsleitung 6 sowie einem zugeordneten Niveauregelventil 5 verbunden. Die am vorderen Einzelfahrwerk des Wagenkastens 1 angeordneten Sekundärfedern 4 sowie eine der am hinteren Einzelfahrwerk des Wagenkastens 2 angeordnete Sekundärfeder 4 werden einzeln über jeweils zugeordnete Niveauregelventile 5 eingestellt. Diese Ausbildung der Niveaureglung läßt die Abstützung von Wankmomenten an jedem Paar von Sekundärfedern (4) zu.

In der Fig. 2 ist zum Unterschied zu Fig. 1 die Anordnung der Niveauregelventile 5 im Bereich des gemeinsamen Fahrwerkes 7 und dem hinteren Fahrwerk anders gewählt. Das der den Sekundärfedern 4' und 4''' zugeordnete Niveauregelventil 5 ist im Bereich der Sekundärfeder 4' angeordnet.

Fig. 3 zeigt einen zweiteiligen Fahrzeugverband, bei dem auf jeder Verbandseite am Fahrwerk 7 die jeweils hintereinanderliegenden Sekundärfedern 4' und 4'' durch eine Verbindungsleitung 6 miteinander verbunden sind. Die Verbindungsleitungen 6 sind bis zur Sekundärfeder 4''' auf der gleichen Verbandseite wie die Sekundärfeder 4' zum hinteren Fahrwerk des Wagenkastens 2 bzw. bis zur Sekundärfeder 4''' auf der gleichen Verbandseite wie die Sekundärfeder 4" zum vorderen Fahrwerk des Wagenkastens 1 geführt. Beiden Verbindungsleitungen 6 sind entsprechende Niveauregelventile 5 zugeordnet. Damit die Bedingung einer statisch bestimmten Dreipunktlagerung für jeden Wagenkasten erfüllt wird, ist in diesem Ausführungsbeispiel zwischen den Wagenkästen 1 und 2 eine zusätzliche Wankkopplung 9 angeordnet.

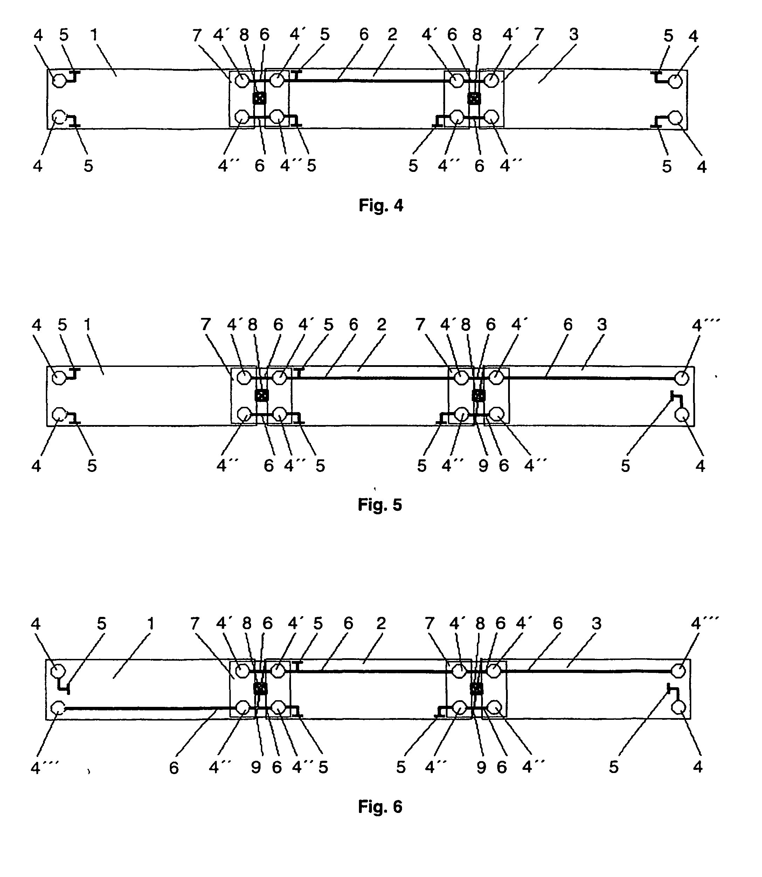

In Fig. 4 ist ein dreiteiliger Fahrzeugverband dargestellt, bei dem die benachbarten Wagenkästen 1 und 2 bzw. 2 und 3 durch ein Gelenk 8 miteinander verbunden sind und die sich am Übergang der Wagenkästen 1, 2 bzw. 2, 3 über je zwei Paar Sekundärfedern 4', 4" auf je einem gemeinsamen Fahrwerk 7 abstützen. Auf der einen Verbandseite werden die am Fahrwerk 7 der Wagenkästen 1, 2 hintereinanderliegenden Sekundärfedern 4' durch eine ventilgeregelte Verbindungsleitung 6 mit-den hintereinanderliegenden Sekundärfedern 4' am Fahrwerk 7 der Wagenkästen 2, 3 verbunden. Die auf der anderen Verbandseite gegenüberliegenden Sekundärfedern 4" sind nur auf dem jeweiligen Fahrwerk 7 mittels einer ventilgeregelten Verbindungsleitung 6 miteinander verbunden. Die am vorderen Einzelfahrwerk des Wagenkastens 1 sowie am hinteren Einzelfahrwerk des Wagenkastens 3 angeordneten Sekundärfedern 4 werden einzeln durch zugeordnete Niveauregelventile 5 eingestellt.

Fig. 5 zeigt einen dreiteiligen Fahrzeugverband, wobei zwischen den Wagenkästen 2 und 3 eine Wankkopplung 9 angeordnet ist. Im Unterschied zur Darstellung in der Fig. 4 ist hierbei die auf einer Verbandseite angeordnete Verbindungsleitung 6 zwischen den Sekundärfedern 4' der beiden Fahrwerke 7 bis zur Sekundärfeder 4''' am hinteren Fahrwerk des Wagenkastens 3 geführt. Den anderen drei einzelnen Sekundärferdern 4 des vorderen und hinteren Fahrwerks ist jeweils ein separates Niveauregelventil 5 zugeordnet. Die zwischen den Wagenkästen 2 und 3 angeordnete Wankkopplung 9 stellt die statische Bestimmtheit des Gesamtsystems sicher.

In Fig. 6 ist ein dreiteiliger Fahrzeugverband dargestellt, bei dem zwischen allen Wagenkästen, also den Wagenkasten 1 und 2 sowie den Wagenkästen 2 und 3, jeweils eine Wankkopplung 9 angeordnet ist. Im Unterschied zur Fahrzeugkonfiguration nach Fig. 5 wird hierbei die beim Fahrwerk 7 der Wagenkästen 1, 2 angeordnete und die Sekundärfedern 4" miteinander verbindende Verbindungsleitung 6 bis zur auf der gleichen Verbandseite angeordneten Sekundärfeder 4''' am vorderen Fahrwerk des Wagenkastens 1 geführt.

Die beschriebenen Ausführungsbeispiele erfüllen alle die Bedingungen der statisch bestimmten Dreipunklagerung für jeden Wagenkasten der Fahrzeugverbände.

Bei Bedarf kann in jede der Verbindungsleitungen 6 ein Element zum Ausgleich unterschiedlicher Federlasten eingebracht werden. Die in den Ausführungsbeispielen beschriebenen Anordnungen lassen sich analog auf Fahrzeugverbände mit mehr als drei Wagenkästen übertragen.

## Patentansprüche

1. Verband spurgeführter Fahrzeuge mit Niveauregelung für das Sekundäredersystem, bestehend aus mindestens zwei durch Gelenk (8) miteinander verbundene und sich an jedem Wagenübergang über zwei Sekundärfederpaare auf einem gemeinsamen Fahrwerk (7) abstützende Wagenkästen (1, 2, 3), wobei zwischen Sekundärfedern (4' bis 4 ''') ventilgeregelte Verbindungsleitungen (6) angeordnet sind, die die Sekundärfederungen des gemeinsamen Fahrwerks verbinden, **dadurch gekennzeichnet, dass** jedes Fahrzeug aus dem Verband Mittel zur statisch bestimmten Dreipunktlagerung der Wagenkästen (1, 2, 3) unter Verwendung von ventilgeregelten Verbindungsleitungen (6) zwischen Sekundärfedern (4' bis 4''') einer Verbandsseite aufweist, dass auf beiden Verbandsseiten je eine ventilgeregelte Verbindungsleitung (6) zwischen hintereinanderliegenden Sekundärfedern (4', 4") eines gemeinsamen Fahrwerkes (7) angeordnet ist und dass die Anzahl der Verbindungsleitungen (6) so gewählt ist, dass die Anzahl der unabhängig voneinander regelbaren Sekundärfedern (4 bis 4''') und damit die Anzahl der Niveauregelventile (5) mit der Summe der Tauch-, Nick- und Wankfreiheitsgrade des Fahrzeugverbandes übereinstimmt und die Anordnung der Niveauregelventile (5) eine definierte, statisch bestimmte Abstützung bei gleichzeitiger Abstützung von Wankmomenten an jedem Sekundärfederpaar zulässt.

2. Verband spurgeführter Fahrzeuge mit Niveauregelung nach Anspruch 1, **dadurch gekennzeichnet, dass** auf einer Verbandseite eine ventilgeregelte Verbindungsleitung (6) zwischen hintereinander liegenden Sekundärfedern (4') eines gemeinsamen Fahrwerkes (7) und hintereinander liegenden Sekundärfedern (4') mindestens eines weiteren Fahrwerkes (7) und auf der anderen Verbandseite jeweils eine ventilgeregelte Verbindungsleitung (6) zwischen den hintereinander liegenden Sekundarfedern (4") jedes der Fahrwerke (7) angeordnet ist.

3. Verband spurgeführter Fahrzeuge mit Niveauregelung nach Anspruche 1 oder 2, **dadurch gekennzeichnet, dass** auf einer oder beiden Verbandsseite(n) zwischen den hintereinander liegenden Sekundärfedern (4',4") eines gemeinsamen Fahrwerkes (7) und einer Sekundärfeder (4''') eines äußeren Einzelfahrwerkes eine Verbindungsleitung (6) angeordnet ist.

4. Verband spurgeführter Fahrzeuge mit Niveauregelung nach einem der Ansprüche 1 bis 3, **dadurch gekennzeichnet, dass** einzelne, mittels Niveauregelventil (5) regelbare Sekundärfedern (4) an den äußeren Einzelfahrwerken angeordnet sind.

5. Verband spurgeführter Fahrzeuge mit Niveauregelung nach einem der Ansprüche 1 bis 4, **dadurch gekennzeichnet, dass** eine zwischen den Wagenkasten (1, 2, 3) angeordnete Wankkopplung (9) ein Niveauregelventil (5) kompensiert, wobei jeweils eine weitere Verbindungsleitung (6) zwischen Sekundärfedern (4', 4",4"') einer Verbandsseite angeordnet ist.

## Claims

1. Unit of track-guided vehicles with level control for the secondary spring system, consisting of at least two superstructures (1, 2, 3), connected to one another by articulation (8) and supported at each wagon transition via two pairs of secondary springs on a common bogie (7), valve-controlled connection lines (6), which connect the secondary suspensions of the common bogie, being arranged between secondary springs (4' to 4'''), **characterised in that** each vehicle from the unit has means for statically determined three-point bearing of the superstructures (1, 2, 3) using valve-controlled connection lines (6) between secondary springs (4' to 4''') of one unit side, **in that** a respective valve-controlled connection line (6) is arranged on either unit side between secondary springs (4', 4") located one behind the other, of a common bogie (7) and **in that** the number of connection lines (6) is selected such that the number of secondary springs (4 to 4''') which can be controlled independently of one another, and therefore the number of level control valves (5) coincides with the sum of the degrees of freedom for dipping, galloping, and rocking motions for the vehicle unit and the arrangement of the level control valves (5) allows defined, statically determined support with simultaneous support of rocking moments at each pair of secondary springs.

2. Unit of track-guided vehicles with level control according to claim 1, **characterised in that** a valve-controlled connection line (6) is arranged on one unit side between secondary springs (4') located one behind the other, of a common bogie (7) and secondary springs (4') located one behind the other, of at least one further bogie (7), and a respective valve-controlled connection line (6) is arranged on the other unit side between the secondary springs (4") located one behind the other, of each of the bogies (7).

3. Unit of track-guided vehicles with level control according to claim 1 or 2, **characterised in that** a connection line (6) is arranged on one or both unit side (s) between the secondary springs (4', 4") located one behind the other, of a common bogie (7) and a secondary spring (4") of an outer single bogie.

4. Unit of track-guide vehicles with level control according to any one of claims 1 to 3, **characterised in that** individual secondary springs (4) which can be controlled by means of a level control valve (5) are arranged on the outer single bogies.

5. Unit of track-guided vehicles with level control according to any one of claims 1 to 4, **characterised in that** a rocking coupling (9) arranged between the superstructures (1, 2, 3) compensates a level control valve (5), a further connection line (6) being arranged in each case between secondary springs (4', 4", 4''') of a unit side.

## Revendications

1. Convoi de véhicules guidés avec une régulation de niveau pour le système de ressorts secondaires, composé d'au moins deux caisses de véhicules (1, 2, 3) qui sont reliées par une articulation (8) et qui s'appuient sur un châssis commun (7) par l'intermédiaire de deux paires de ressorts secondaires, au niveau de chaque transition de véhicules, étant précisé qu'il est prévu entre les ressorts secondaires (4' à 4"') des lignes de liaison réglées par soupapes (6) qui relient les suspensions secondaires du châssis commun, **caractérisé en ce que** chaque véhicule du convoi comporte des moyens pour un montage en trois points, défini de manière statique, des caisses (1, 2, 3) à l'aide de lignes de liaison réglées par soupapes (6) entre les ressorts secondaires (4' à 4"') d'un côté du convoi, **en ce qu'**il est prévu de chaque côté du convoi une ligne de liaison réglée par soupape (6) entre des ressorts secondaires (4', 4") d'un châssis commun (7) disposés l'un derrière l'autre, et **en ce que** le nombre de lignes de liaison (6) est choisi pour que le nombre de ressorts secondaires (4 à 4"') aptes à être réglés indépendamment les uns des autres, et donc le nombre de soupapes de régulation de niveau (5) coincident avec la somme des degrés d'absence de galop, de tangage et de roulis du convoi et la disposition des soupapes de régulation de niveau (5) autorise un appui défini, défini de manière statique, avec en même temps un appui des couples de roulis au niveau de chaque paire de ressorts secondaires.

2. Convoi de véhicules guidés avec une régulation de niveau selon la revendication 1, **caractérisé en ce qu'**il est prévu sur un côté du convoi une ligne de liaison réglée par soupape (6) entre les ressorts secondaires (4') d'un châssis commun (7) situés l'un derrière l'autre et les ressorts secondaires (4') d'au moins un autre châssis (7) situés l'un derrière l'autre, et sur l'autre côté du convoi une ligne de liaison réglée par soupape (6) entre les ressorts secondaires (4") de chaque châssis (7) situés l'un derrière l'autre.

3. Convoi de véhicules guidés avec un régulation de niveau selon la revendication 1 ou 2, **caractérisé en ce qu'**une ligne de liaison (6) est prévue sur un côté du convoi ou sur les deux côtés du convoi, entre les ressorts secondaires (4', 4") d'un châssis commun (7) situés l'un derrière l'autre et un ressort secondaire (4"') d'un châssis individuel extérieur.

4. Convoi de véhicules guidés avec une régulation de niveau selon l'une des revendications 1 à 3, **caractérisé en ce que** des ressorts secondaires (4) individuels réglables à l'aide d'une soupape de régulation de niveau (5) sont disposés sur les châssis individuels extérieurs.

5. Convoi de véhicules guidés avec une régulation de niveau selon l'une des revendications 1 à 4, **caractérisé en ce qu'**un accouplement de roulis (9) disposé entre les caisses de véhicules (1, 2, 3) compense une soupape de régulation de niveau (5), une autre ligne de liaison (6) étant disposée entre les ressorts secondaires (4', 4", 4"') de chaque côté du convoi.
